# EUROPEAN PATENT APPLICATION

(11) **EP 4 495 005 A1**
(43) Date of publication of application: **22.01.2025**
(21) Application number: 24190160.2
(22) Date of filing: 22.07.2024
(51) Int. Cl.: B64D 13/06

(54) **ENVIRONMENTAL CONTROL SYSTEM WITH ADAPTIVE TURBINE ARRANGEMENT**

(30) Priority: 21.07.2023 US 202318356399
(71) Applicant: Hamilton Sundstrand Corporation, Charlotte, NC 28217-4578 (US)
(72) Inventor: VIGNALI, Mark G., Simsbury, CT (US)
(74) Representative: Dehns

(57) **Abstract**

A method of operating an environmental control system pack of a vehicle includes providing a thermodynamic device (40) including a compressor (42) and a plurality of turbines (44) including a first turbine (44a) and a second turbine (44b) mounted to a shaft (46) and a plurality of valves fluidly coupled to the thermodynamic device, operating at least one of the plurality of valves to supply a medium to the first turbine and the second turbine in series during a mode of operation, and operating at least one of the plurality of valves to supply a first portion of the medium to the first turbine and to supply a second portion of the medium to the second turbine independently from the first portion of the medium in location another mode of operation.

## Description

### BACKGROUND

Embodiments of the disclosure relate to environmental control systems, and more specifically to an environmental control system (ECS) of an aircraft.

Aircraft need to have their internal environment controlled. In general, contemporary air conditioning systems are supplied a pressure at cruise that is approximately 30 psig to 35 psig. The trend in the aerospace industry today is towards systems with higher efficiency. One approach to improve efficiency of an aircraft environmental control system is to eliminate the bleed air entirely and use electrical power to compress outside air. A second approach is to use lower engine pressure and thus, pressure to the inlet of the ECS. The third approach is to use the energy in the cabin outflow air to compress outside air and bring it into the cabin. Each of these approaches provides a reduction in airplane fuel burn.

### SUMMARY

According to one aspect, a method of operating an environmental control system pack of a vehicle includes providing a thermodynamic device including a compressor and a plurality of turbines including a first turbine and a second turbine mounted to a shaft and a plurality of valves fluidly coupled to the thermodynamic device, operating at least one of the plurality of valves to supply a medium to the first turbine and the second turbine in series during a mode of operation, and operating at least one of the plurality of valves to supply a first portion of the medium to the first turbine and to supply a second portion of the medium to the second turbine independently from the first portion of the medium in location another mode of operation.

In embodiments operating at least one of the plurality of valves to supply the first portion of the medium to the first turbine and to supply the second portion of the medium to the second turbine independently from the first portion of the medium in the another mode of operation includes supplying the medium from the first turbine directly to an outlet of the environmental control system pack.

In embodiments operating at least one of the plurality of valves to supply the first portion of the medium to the first turbine and to supply the second portion of the medium to the second turbine independently from the first portion of the medium in the another mode of operation includes mixing the first portion of the medium from a first turbine outlet with the second portion of the medium from a second turbine outlet at a position upstream from an outlet of the environmental control system pack.

In embodiments operating at least one of the plurality of valves to supply the medium to only one of the plurality of turbines during yet another mode of operation.

In embodiments operating at least one of the plurality of valves to supply the medium to only one of the first turbine and the second turbine during the yet another mode of operation includes supplying the medium to only the second turbine.

In embodiments supplying the medium to only the second turbine includes operating a valve associated with a first turbine bypass conduit arranged in parallel with the first turbine.

In embodiments supplying the medium to only the second turbine includes operating a valve associated with a dehumidification bypass conduit arranged in parallel with a dehumidification system.

In embodiments operating at least one of the plurality of valves to supply the medium to only one of the first turbine and the second turbine during the yet another mode of operation includes supplying the medium to only the first turbine.

In embodiments supplying the medium from the first turbine directly to an outlet of the environmental control system pack.

In embodiments supplying the medium to only the first turbine includes operating a valve associated with a system bypass conduit. The system bypass conduit has an inlet arranged directly downstream from a first turbine outlet.

In embodiments supplying the medium to only the first turbine includes operating a valve associated with a system bypass conduit. The system bypass conduit has an inlet arranged directly downstream from an interface between a first turbine outlet and a first turbine bypass conduit arranged in parallel with the first turbine.

In embodiments selecting one of the first turbine and the second turbine based on at least one of a demand of one or more loads connected to the environmental control system pack and a flow requirement of the environmental control system pack and operating at least one of the plurality of valves to supply the medium to the selected first turbine or second turbine.

In embodiments bypassing the compressor and a ram heat exchanger during operation in at least one mode of operation.

### BRIEF DESCRIPTION OF THE DRAWINGS

The following descriptions should not be considered limiting in any way. With reference to the accompanying drawing, like elements are numbered alike:
Fig. 1 is a schematic diagram of an environmental control system according to an embodiment;
Fig. 2 is a schematic diagram of an environmental control system according to another embodiment; and
Fig. 3 is a schematic diagram of an environmental control system according to yet another embodiment.

### DETAILED DESCRIPTION

A detailed description of one or more embodiments of the disclosed apparatus and method are presented herein by way of exemplification and not limitation with reference to the Figure.

Embodiments herein provide an environmental control system of an aircraft that mixes mediums from different sources to power the environmental control system and to provide cabin pressurization and cooling at a high fuel burn efficiency. The medium can generally be air, while other examples include gases, liquids, fluidized solids, or slurries.

With reference now to the Figures, schematic diagrams of a portion of an environment control system (ECS) 10 including an environmental control system pack 20, such as an air conditioning unit or pack for example, are depicted according to non-limiting embodiments. Although the environmental control system 10 is described with reference to an aircraft, alternative applications are also within the scope of the disclosure. As shown in each of the FIGS., the ECS 10 has an inlet 22 configured to receive a medium A from a source 24. The environmental control system pack 20 is configured to deliver a conditioned form of the medium A to an outlet 26 fluidly coupled to one or more loads, such as a cabin for example. In embodiments where the ECS 10 is used in an aircraft application, the medium A may be bled air, which is pressurized air originating from i.e., being "bled" from, an engine or auxiliary power unit of the aircraft. It shall be understood that one or more of the temperature, humidity, and pressure of the bleed air provided via a bleed air system 24 can vary based upon the compressor stage and revolutions per minute of the engine or auxiliary power unit from which the air is drawn.

In other embodiments, the medium A provided to the inlet 22 may be fresh air, such as outside air for example. The outside air can be procured via one or more scooping mechanisms, such as an impact scoop or a flush scoop for example. In such embodiments, the fresh air as described herein is at an ambient pressure equal to an air pressure outside of the aircraft when the aircraft is on the ground and is between an ambient pressure and a cabin pressure when the aircraft is in flight. Alternatively, the medium A may be provided from the cabin of the aircraft. In such embodiments the medium A is cabin discharge air, which is air leaving the cabin and that would typically be discharged overboard. In yet another embodiment, the medium A is provided from a cabin air compressor located upstream from the inlet 22. It should be understood that a medium A including a mixture of any of the mediums described herein and/or other suitable mediums may be provided from another suitable source of the aircraft is also within the scope of the disclosure.

The ECS pack 20 includes a RAM air circuit 30 having a shell or duct, illustrated schematically in broken lines at 32, within which one or more heat exchangers are located. The ram air shell 32 can receive and direct a medium, such as ram air for example, through a portion of the ECS pack 20. The one or more heat exchangers are devices built for efficient heat transfer from one medium to another. Although the heat exchangers are illustrated as having a single pass configuration, it should be appreciated that in other embodiments, at least one of the mediums may make multiple passes through the heat exchanger. Further, the mediums may be arranged in any suitable flow configuration at the heat exchanger, such as cross-flow, parallel flow, counter-flow, or any combination thereof. Examples of the type of heat exchangers that may be used, include, but are not limited to, double pipe, shell and tube, plate, plate and shell, adiabatic shell, plate fin, pillow plate, and fluid heat exchangers.

The one or more heat exchangers arranged within the shell 32 may be referred to as a ram heat exchanger. In the illustrated, non-limiting embodiment, the ram heat exchangers include a first or primary heat exchanger 34 and a second or secondary heat exchanger 36. Although two heat exchangers are illustrated, it should be understood that embodiments including a single heat exchanger, or alternatively, embodiments including more than two heat exchangers are also contemplated herein. Within the heat exchangers 34, 36, ram air, such as outside air for example, acts as a heat sink to cool the medium passing there through.

The ECS pack 20 additionally comprises at least one thermodynamic device 40. In the illustrated, non-limiting embodiments, the ECS pack 20 includes a single thermodynamic device 40; however, embodiments including additional thermodynamic devices are also within the scope of the disclosure. In the illustrated, non-limiting embodiment, the thermodynamic device 40 is a mechanical device that includes components for performing thermodynamic work on a medium (e.g., extracts work from or applies work to the medium A by raising and/or lowering pressure and/or by raising and/or lowering temperature). Examples of a thermodynamic device 40 include an air cycle machine, a two-wheel air cycle machine, a three-wheel air cycle machine, a four-wheel air cycle machine, etc. In the illustrated, non-limiting embodiment, the thermodynamic device 40 is a four-wheel air cycle machine.

The thermodynamic device 40 includes a compressor 42 and at least one turbine 44 operably coupled to each other via a shaft 46. The compressor 42 is a mechanical device that raises a pressure of a medium and can be driven by another mechanical device (e.g., a motor or a medium via a turbine). Examples of compressor types include centrifugal, diagonal or mixed-flow, axial-flow, reciprocating, ionic liquid piston, rotary screw, rotary vane, scroll, diaphragm, air bubble, etc. The turbine 44 is a mechanical device that expands a medium and extracts work therefrom (also referred to as extracting energy) to drive the compressor 42 via the shaft 46. In the illustrated, non-limiting embodiment, the thermodynamic device 40 includes a first turbine 44a and a second turbine 44b.

In an embodiment, the thermodynamic device 40 includes a fan 48 mounted to the shaft 46. The fan 48 is a mechanical device that can force via push or pull methods a medium (e.g., ram air) through the shell 32 across the one or more ram heat exchangers 34, 36 and at a variable cooling flow rate to control temperatures. As shown, the first turbine 44a and the second turbine 44b are operable independently or in combination, to drive the compressor 42 and the fan 48 via the shaft 46. Although the fan 48 is illustrated as being part of the air cycle machine that forms the thermodynamic device 40, in other embodiments, the fan 48 may be separate from the thermodynamic device 40 and driven by another suitable means. In such instances, the fan 48 may be electrically driven, may be a tip-turbine fan, or may be part of a separate simple cycle machine.

The ECS pack 20 may additionally include a dehumidification system. In the illustrated, non-limiting embodiment, the dehumidification system includes a reheater 50, a condenser 52, and a water extractor or water collector 54 arranged in series relative to a flow of the medium A. The reheater 50 and condenser 52 are particular types of heat exchangers and the water collector 54 is a mechanical device that performs a process of removing water from a medium. In the non-limiting embodiment shown in the FIGS., the reheater 50 is illustrated as a separate heat exchanger located downstream from and arranged in fluid communication with an outlet of the secondary heat exchanger 36. In combination, the reheater 50, the condenser 52, and/or the water extractor 54 may form a high-pressure water separator because the pressure of the medium provided thereto is at or is very close to its highest pressure within the ECS pack 20. Alternatively, in other embodiments, the functionality of the reheater 50 and the condenser 52 are integrated into a single heat exchanger. It should be understood that an ECS pack 20 having at least one dehumidification system with any suitable configuration is also contemplated herein.

The elements of the ECS pack 20 are connected via valves, tubes, pipes, and the like. Valves (e.g., flow regulation device or mass flow valve) are devices that regulate, direct, and/or control a flow of a medium by opening, closing, or partially obstructing various passageways within the tubes, pipes, etc. of the system. Valves can be operated by actuators, such that flow rates of the medium in any portion of the ECS pack 20 can be regulated to a desired value. It should be appreciated that the valves may be operated independently or in combination to form a medium A having a desired temperature and pressure at the outlet 26. For instance, a first valve V1 may be operable to control the supply of the medium A to the ECS pack 20. In embodiments where the thermodynamic device 40 includes a plurality of turbines 44, the ECS pack 20 may include at least one valve to allow the medium A to bypass at least one of the turbines 44. For example, a second valve V2 may be arranged within a first turbine bypass conduit 60 extending parallel to the inlet of the first turbine 44a, such that when the second valve V2 is open, at least a portion of the medium A output from the secondary heat exchanger 36 bypasses the first turbine 44a. Alternatively, or in addition, a third valve V3 may be arranged a within a second turbine bypass conduit 62 extending parallel to the inlet of the second turbine 44b, such that when the third valve V3 is open, at least a portion of the medium A output from the condenser 52 bypasses the second turbine 44b.

In an embodiment, a third or dehumidification bypass conduit 64 including a fourth valve V4 is arranged in parallel with an inlet of the dehumidification system, such as the reheater 50 for example, and is connected to a pass within the condenser 52, such that fluid within the third bypass conduit bypasses a first pass through the reheater, a first pass through the condenser, a second pass through the reheater, and the first turbine 44a. A fifth valve V5 may be operable to allow some or all of the flow output from the primary heat exchanger 34 to bypass the compressor 42.

Each of the valves of the ECS pack 20 is operably coupled to a controller (not shown). The controller may be configured to adjust a position of the one or more valves based on a temperature and pressure of the medium A provided to the inlet 22 and the temperature and pressure demands of the one or more loads fluidly coupled to an outlet 26 of the ECS pack 20.

The ECS pack 20 may be operable in at least one mode or operation, and in some embodiments in a plurality of modes of operation. Operation of the ECS pack 20 in a first mode may be associated with take-off, climb, or operation of the aircraft on the ground. During operation in the first mode, valve V1 is opened such that the medium A, such as bleed air for example, is provided to the inlet 22 from the source 24 and valves V2, V3, and V4 may be closed. As shown, the medium A may be provided to the first or primary heat exchanger 34. Within the primary heat exchanger 34, the medium A is cooled via a flow of ram air, such as driven by the fan 48. At least one conduit 70 fluidly couples the outlet 72 of the primary heat exchanger 34 and the inlet 74 of the compressor 42. Accordingly, the cooled medium A flows from the primary heat exchanger 34 to the compressor 42 where the medium A is compressed to form compressed medium A'. The act of compressing the medium A heats the medium A and/or increases the pressure thereof.

The outlet 76 of the compressor 42 is fluidly connected to an inlet 78 of the secondary heat exchanger 36 by at least one conduit 80. The compressed medium A' output from the compressor 42 is therefore provided to the secondary heat exchanger 36 where the compressed medium A' is again cooled via the flow of ram air. From the outlet of the 82 of the secondary heat exchanger 36, the compressed medium A' flows into conduit 84. Because valve V4 arranged within the dehumidification bypass conduit 64 fluidly connected to the conduit 84 is closed during normal operation, the cool compressed medium A' is configured to flow to the dehumidification system.

The cool compressed medium A' is configured to flow through the reheater 50, the condenser 52, and the water extractor 54 sequentially. The cool compressed medium A' is cooled and further cooled within the reheater 50 and the condenser 52, respectively, causing any moisture within the compressed medium A' to condense. This moisture is then removed from the flow of compressed medium A' within the water extractor 54. The resulting cool, dry compressed medium A' output from the water extractor 54 is configured to pass through the reheater 50 again. Within this second pass through the reheater 50, the cool, dry compressed medium A' output from the water extractor 54 is at least partially heated by the compressed medium A' output from the secondary heat exchanger 36 of the ram air circuit 30 to produce a warm, dry compressed medium A'.

As previously noted, valve V2 may be closed such that the dry compressed medium A' output from the reheater 50 is provided from the dehumidification system to an inlet 86 of the first turbine 44a via a passage 88. Within the first turbine 44a, work is extracted from the compressed medium A' and is used to drive the compressor 42 and the fan 48. The outlet 90 of the first turbine 44a is arranged in fluid communication with the condenser 52 via a conduit 92. Accordingly, the cooled expanded medium A" output from the first turbine outlet 90 flows through passage 92 back to the condenser 52 where the expanded medium A" is heated. When valve V3 is closed, the heated expanded medium A" output from the condenser 52 is provided to the inlet 94 of the second turbine 44b. Similar to the first turbine 44a, energy is extracted from the expanded medium A" and is used to drive both the compressor 42 and the fan 48. The temperature and/or the pressure of the further expanded medium A" provided at the outlet 96 of the second turbine 44b is reduced compared to that of the expanded medium A" at the inlet 94. The expanded medium A" provided at the second turbine outlet 96 may be considered conditioned and suitable for delivery to one of more loads via an outlet 26. Accordingly, in the first mode of operation, the medium is provided to the first turbine 44a and the second turbine 44b in series. It should be appreciated that the environmental control systems and packs thereof illustrated and described herein are intended as an example only, and that an environmental control system having another configuration is also contemplated herein.

In a second mode of operation, such as when the aircraft is at high altitude cruise for example, the medium A may be configured to bypass one of the plurality of turbines of the thermodynamic device 40. In an embodiment, the valves are positioned such that the medium A bypasses the first turbine 44a. Such a mode of operation may be substantially identical to the first mode; however, valve V2 is open such that all of the compressed medium A' is provided to the first turbine bypass conduit 60. The flow of the compressed medium A' downstream from the first turbine bypass conduit 60may also be the same as in the first mode.

Alternatively, to bypass the first turbine 44a, the valve V4 arranged within the dehumidification bypass conduit 64 may be open. Accordingly, the entire flow of compressed medium A' within conduit 84 may bypass the dehumidification system and the first turbine 44a and flow directly into the dehumidification bypass conduit 64. In such embodiments, the compressed medium A' will flow through the second pass of the condenser 52. However, because no secondary flow is provided to the condenser 52, the temperature of the compressed medium A' will remain substantially constant. From the condenser 52, the compressed medium A' may be provided to the second turbine 44b, within which the compressed medium A' is expanded to form an expanded medium A".

As noted above, when flow through only a single turbine of the thermodynamic device 40 is desired, the flow of medium A typically bypasses the first turbine 44a and is provided to the second turbine 44b. However, in other embodiments, the ECS pack 20 may be adapted such that the medium A is alternatively or additionally able to flow through only the first turbine 44a and bypass the second turbine 44b. The controller C may selectively operate the ECS 10 in the second mode or the third mode or supply the medium to the second turbine or to the first turbine based on the demand of one or more loads connected to the environmental control system pack 20 and/or a flow requirement of the environmental control system pack 20.

In an embodiment, the ECS pack 20 includes another bypass conduit 100, also referred to herein as a system bypass conduit, operable to bypass the second pass of the condenser 52 and the second turbine 44b. Accordingly, the system bypass conduit 100 delivers the expanded medium A' output from the outlet 90 of the first turbine 44a to a location at or directly upstream from the outlet 26 associated with one or more loads. A sixth valve V6 may be fluidly coupled to the fourth bypass conduit 100 and operable to control a flow of medium therethrough. Although the valve V6 is generally illustrated as being located near an outlet of the system bypass conduit 100, it should be understood that the valve V6 may be located at any suitable location to control the flow.

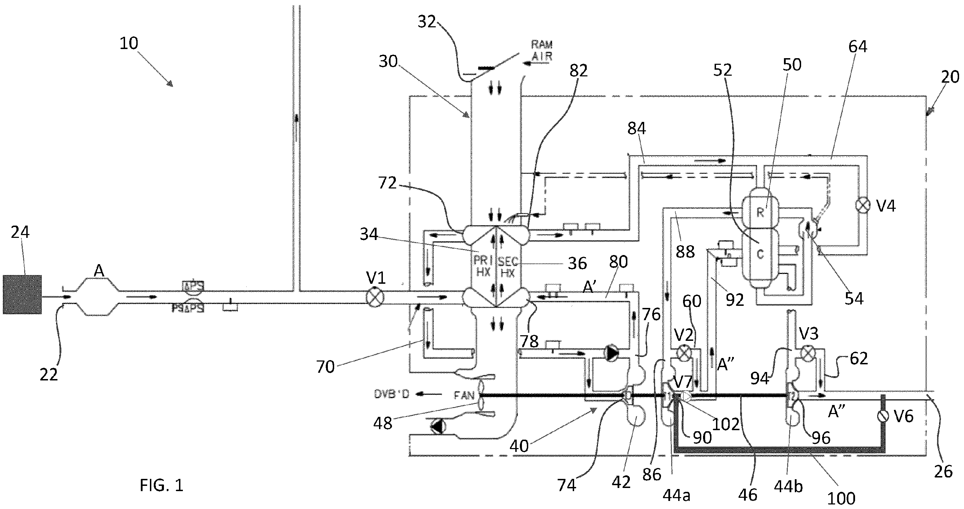

In the illustrated, non-limiting embodiment of FIG. 1, an inlet 102 of the system bypass conduit 100 is located directly downstream from the outlet 90 of the first turbine 44a. In such embodiments, the inlet 102 may be positioned upstream from the interface between the first turbine bypass conduit 60 and the outlet of the first turbine 44a relative to the flow of medium A. A valve V7, such as a check valve for example, may be located at or directly downstream from the inlet end 102 of the fourth bypass conduit within conduit 92 to prevent undesired flow of any of compressed medium A' from the bypass conduit 60 or any flow from the condenser 52 backwards into the system bypass conduit 100. By fluidly connecting the outlet 90 of the first turbine 44a, but not the first turbine bypass conduit 60 to the system bypass conduit 100, only the expanded medium A' output from the turbine 44a is provided to the outlet 26. The compressed medium A' from the first turbine bypass conduit 60 is provided to condenser 52 and possibly to the second turbine 44 before reaching the outlet 26.

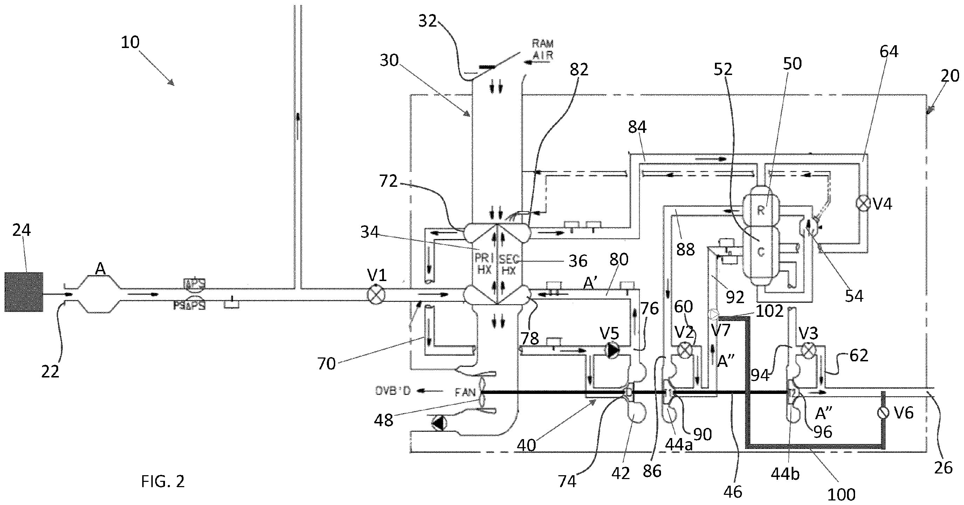

In other embodiments, such as shown in FIG. 2, the inlet 102 of the system bypass conduit 100 may be located downstream from interface between the first turbine bypass conduit 60 and the outlet of the first turbine 44a relative to the flow of medium A. In such embodiments, both the expanded medium A' output from the turbine 44a and any compressed medium A' within the first turbine bypass conduit 60 are provided directly to the outlet 26. With continued reference to FIG. 2, the valve V7 may be located at or directly downstream from the inlet end 102 of the system bypass conduit 100 within conduit 92 to prevent undesired flow of a medium from the condenser 52 into the lower pressure system bypass conduit 100.

In a third mode of operation where the medium A is configured to bypass the second turbine 44b, the valve V6 arranged within the system bypass conduit 100 is open. The flow of the medium A between the inlet 22 and the inlet 86 of the turbine 44a may be substantially identical to that described with respect to the first and second modes. From the inlet of the first turbine 44a, the compressed medium A' is expanded within the first turbine 44a, thereby creating an expanded medium A". From the outlet 90 of the first turbine 44a, the expanded medium A" is provided to the system bypass conduit 100 and to the outlet 26. With reference to FIG. 1, in some embodiments valve V2 is closed during operation in the third mode. However, in other embodiments, depending on the position of the inlet 102 of the fourth bypass conduit, valve V2 may be open during operation of the ECS pack 20 in the third mode.

In a fourth mode of operation, the medium A can be provided to the first turbine 44a and the second turbine 44b of the ECS pack 20 in parallel. In an embodiment, during operation in the fourth mode, valves V1, V2, and V6 are open and valves V3 and V4 are closed. The medium A is provided from the source 22 to the first or primary heat exchanger 34 where the medium A is cooled, such as via a flow of ram air. From the outlet 72 of the primary heat exchanger 34, the cooled medium A flows to the compressor 42 where the medium A is compressed to form compressed medium A'. From the compressor 42, the compressed medium A' is provided to the secondary heat exchanger 36 where the compressed medium A' is again cooled via the flow of ram air. From the outlet of the 82 of the secondary heat exchanger 36, the compressed medium A' is provided to the reheater 50 via conduit 84.

The cool compressed medium A' is configured to flow through the reheater 50, the condenser 52, and the water extractor 54 sequentially, as previously described. A first portion of the resulting, warm, dry compressed medium A' output from the reheater 50 is provided to the inlet 86 of the first turbine 44a and a second portion of the compressed medium A' output from the reheater 50 is provided to the first turbine bypass conduit 60. Within the first turbine 44a, energy is extracted from the first portion of the compressed medium A' to form an expanded medium A". From the outlet 90 of the first turbine 44a, the expanded medium A" is delivered to the outlet 26 via the system bypass conduit 100.

From the first turbine bypass conduit 60, the second portion of the compressed medium A' flows through passage 92 back to the condenser 52 where the second portion of the compressed medium A' is heated. The heated second portion of the compressed medium A'output from the condenser 52 is provided to the inlet 94 of the second turbine 44b such that energy is extracted from the second portion of the compressed medium A' to form an expanded medium A". The expanded medium A" provided at the outlet 96 of the second turbine 44b may be delivered to the outlet 26 independently or may be mixed with the expanded medium A" from the system bypass conduit 100 upstream from the outlet 26.

With reference to FIG. 2, in an embodiment, during operation of the ECS pack 20 in the fourth mode, valves V1, V4, and V6 are open and valve V3 is closed. Similar to the embodiment of FIG. 1, the medium A is provided from the source 22 to the first or primary heat exchanger 34 where the medium A is cooled, such as via a flow of ram air. From the outlet 72 of the primary heat exchanger 34, the cooled medium A flows to the compressor 42 where the medium A is compressed to form compressed medium A'. From the compressor 42, the compressed medium A' is provided to the secondary heat exchanger 36 where the compressed medium A' is again cooled via the flow of ram air. From the outlet of the 82 of the secondary heat exchanger 36, the compressed medium A' flows into conduit 84.

A first portion of compressed medium A' within the conduit 84 is configured to flow toward the dehumidification system and a second portion of compressed medium A' within the conduit 84 is provided to the dehumidification bypass conduit 64. The first portion of the compressed medium A' flows through the reheater 50, the condenser 52, and the water extractor 54 sequentially, as previously described. The resulting, warm, dry compressed medium A' output from the reheater 50 may be provided to the inlet 86 of the first turbine 44a. Within the first turbine 44a, energy is extracted from the first portion of the compressed medium A' to form an expanded medium A". In embodiments where valve V2 is open, a portion of the compressed medium A' is also provided to the first turbine bypass conduit 60. The expanded medium A" output from the outlet 90 of the first turbine 44a, and in some embodiments, the compressed medium A' from the first turbine bypass conduit 60 are then provided to the outlet l26 via the system bypass conduit 100.

From the dehumidification bypass conduit 64, the compressed medium A' is provided to the second pass of the condenser 52. Within the condenser 52, the second portion of the compressed medium A' is heated by the flow of the first portion of the compressed medium A'. From the condenser 52, the warm compressed medium A' is provided to the second turbine 44b to form an expanded medium A". The expanded medium A" provided at the outlet 96 of the second turbine 44b may be delivered to the outlet 26 independently or may be mixed with the expanded medium A" from the system bypass conduit 100 upstream from the outlet 26.

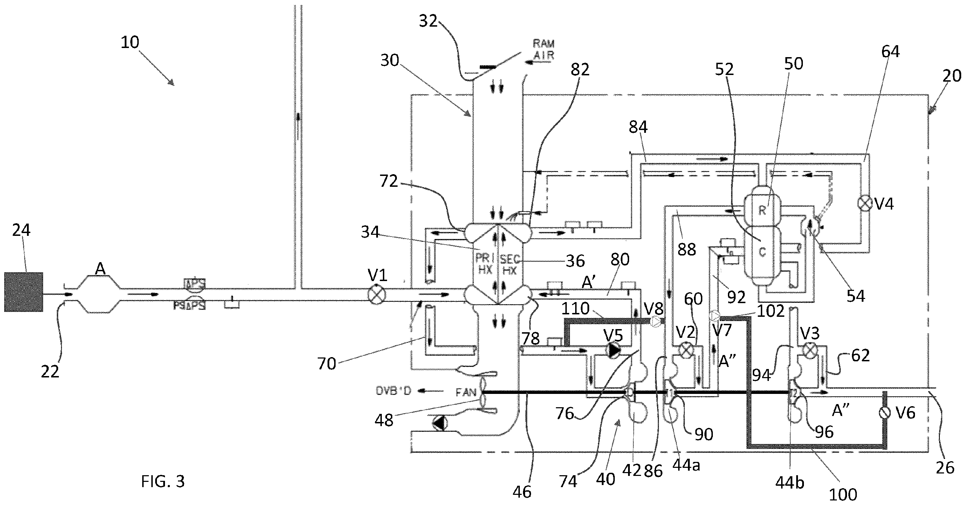

Although the flow of medium through the ECS pack 20 as illustrated and described herein is configured to move from the compressor 42 to the secondary heat exchanger 36, it should be appreciated that in some embodiments, valve V5 may be opened such that at least a portion of the medium A bypasses the compressor 42. Further, as shown in FIG. 3, in an embodiment, a compressor and ram heat exchanger bypass conduit 110 may fluidly couple a location upstream of both the compressor 42 and the compressor bypass containing valve V5 to a location directly upstream from the inlet 86 of the first turbine 44a and the first turbine bypass conduit 60. A valve, such as a check valve V8 for example, may be arranged within the compressor and ram heat exchanger bypass conduit 110. In such embodiments, medium A may bypass the compressor 42 and secondary heat exchanger 36 to prevent the occurrence of a large pressure drops at the heat exchanger 36. Although the compressor and ram heat exchanger bypass conduit 110 is illustrated in combination with a system bypass conduit located downstream form the first turbine bypass conduit 60, it should be appreciated that the system of FIG. 1, as well as any other suitable system may be adapted to include a compressor and ram heat exchanger bypass conduit 110 as disclosed herein.

As previously noted, the environmental control system pack 20 illustrated and described herein is intended as an example only. It should be understood that any environmental control system having a primary and secondary heat exchanger 34, 36 may be adapted to include at least the first bypass conduit and a corresponding valve, to selectively provide the flow of a medium A to the primary and secondary heat exchangers 34, 36 in series and in parallel.

The term "about" is intended to include the degree of error associated with measurement of the particular quantity based upon the equipment available at the time of filing the application.

The terminology used herein is for the purpose of describing particular embodiments only and is not intended to be limiting of the present disclosure. As used herein, the singular forms "a," "an" and "the" are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one or more other features, integers, steps, operations, element components, and/or groups thereof.

While the present disclosure has been described with reference to an exemplary embodiment or embodiments, it will be understood by those skilled in the art that various changes may be made without departing from the scope of the invention as defined by the claims. In addition, many modifications may be made to adapt a particular situation or material to the teachings of the present disclosure without departing from the scope of the claims.

## Claims

1. A method of operating an environmental control system pack of a vehicle further comprises:
providing a thermodynamic device (40) including a compressor (42) and a plurality of turbines (44) including a first turbine (44a) and a second turbine (44b) mounted to a shaft (46) and a plurality of valves fluidly coupled to the thermodynamic device;
operating at least one of the plurality of valves to supply a medium to the first turbine and the second turbine in series during a mode of operation; and
operating at least one of the plurality of valves to supply a first portion of the medium to the first turbine and to supply a second portion of the medium to the second turbine independently from the first portion of the medium in location another mode of operation.

2. The method of claim 1, wherein operating at least one of the plurality of valves to supply the first portion of the medium to the first turbine and to supply the second portion of the medium to the second turbine independently from the first portion of the medium in the another mode of operation further comprises supplying the medium from the first turbine directly to an outlet of the environmental control system pack.

3. The method of claim 1, wherein operating at least one of the plurality of valves to supply the first portion of the medium to the first turbine and to supply the second portion of the medium to the second turbine independently from the first portion of the medium in the another mode of operation further comprises mixing the first portion of the medium from a first turbine outlet with the second portion of the medium from a second turbine outlet at a position upstream from an outlet of the environmental control system pack.

4. The method of claim 1, further comprising operating at least one of the plurality of valves to supply the medium to only one of the plurality of turbines during yet another mode of operation.

5. The method of claim 4, wherein operating at least one of the plurality of valves to supply the medium to only one of the first turbine and the second turbine during the yet another mode of operation further comprises supplying the medium to only the second turbine.

6. The method of claim 5, wherein supplying the medium to only the second turbine further comprises operating a valve associated with a first turbine bypass conduit arranged in parallel with the first turbine.

7. The method of claim 5, wherein supplying the medium to only the second turbine further comprises operating a valve associated with a dehumidification bypass conduit arranged in parallel with a dehumidification system.

8. The method of claim 4, wherein operating at least one of the plurality of valves to supply the medium to only one of the first turbine and the second turbine during the yet another mode of operation further comprises supplying the medium to only the first turbine.

9. The method of claim 8, wherein further comprises supplying the medium from the first turbine directly to an outlet of the environmental control system pack.

10. The method of claim 9, wherein supplying the medium to only the first turbine further comprises operating a valve associated with a system bypass conduit, the system bypass conduit having an inlet arranged directly downstream from a first turbine outlet.

11. The method of claim 9, wherein supplying the medium to only the first turbine further comprises operating a valve associated with a system bypass conduit, the system bypass conduit having an inlet arranged directly downstream from an interface between a first turbine outlet and a first turbine bypass conduit arranged in parallel with the first turbine.

12. The method of claim 4, further comprising selecting one of the first turbine and the second turbine based on at least one of a demand of one or more loads connected to the environmental control system pack and a flow requirement of the environmental control system pack and operating at least one of the plurality of valves to supply the medium to the selected first turbine or second turbine.

13. The method of claim 4, further comprising bypassing the compressor and a ram heat exchanger (110) during operation in at least one mode of operation.
